# EUROPÄISCHE PATENTSCHRIFT

(11) **EP 4 040 040 B1**
(45) Veröffentlichungstag und Bekanntmachung des Hinweises auf die Patenterteilung: **20.12.2023**
(21) Anmeldenummer: 21155997.6
(22) Anmeldetag: 09.02.2021
(51) Int. Cl.: F21S 41/265, F21S 41/143, F21S 41/20, F21S 41/153, G02B 3/00, G02B 27/00

(54) **PROJEKTIONSVORRICHTUNG FÜR EINEN KRAFTFAHRZEUGSCHEINWERFER**
PROJECTION DEVICE FOR A MOTOR VEHICLE HEADLAMP
DISPOSITIF DE PROJECTION POUR UN PHARE DE VÉHICULE AUTOMOBILE

(43) Veröffentlichungstag der Anmeldung: 10.08.2022
(62) Teilanmeldung aus: 21193039.1
(73) Patentinhaber: ZKW Group GmbH, 3250 Wieselburg (AT)
(72) Erfinder: Gürtl, Josef, 3233 Kilb (AT)
(74) Vertreter: Patentanwaltskanzlei Matschnig & Forsthuber OG

(56) Entgegenhaltungen:
- WO-A1-01/44871
- DE-A1-102005 003 594
- GB-A- 2 509 764
- US-A1- 2005 002 105
- US-A1- 2009 122 175

## Beschreibung

Die Erfindung betrifft eine Projektionsvorrichtung für einen Kraftfahrzeugscheinwerfer, wobei die Projektionsvorrichtung zur Abbildung von Licht in Form zumindest einer Lichtverteilung in eine Hauptabstrahlrichtung eingerichtet ist, wobei die Projektionsvorrichtung Folgendes umfasst:
- zumindest ein Lichteintritts-Mikrooptikarray, welches eine Mehrzahl in einer zu der Hauptabstrahlrichtung der Projektionsvorrichtung orthogonal stehenden Ebene matrixartig angeordnete Mikro-Eintrittsoptiken mit einer Lichteintrittsfläche aufweist, wobei die Mikro-Eintrittsoptiken eingerichtet sind, Lichtstrahlen einer Lichtquelle über die jeweilige Lichteintrittsfläche in die Projektionsvorrichtung einzukoppeln,
- zumindest ein Lichtaustritts-Mikrooptikarray, welches eine Mehrzahl in einer zu der Hauptabstrahlrichtung der Projektionsvorrichtung orthogonal stehenden Ebene matrixartig angeordnete Mikro-Austrittsoptiken mit einer Lichtaustrittsfläche aufweist, wobei die Mikro-Austrittsoptiken eingerichtet sind, in die Projektionsvorrichtung eingekoppelte Lichtstrahlen über die jeweilige Lichtaustrittsfläche aus der Projektionsvorrichtung in Richtung der Hauptabstrahlrichtung auszukoppeln,
- eine Substratschicht, an welcher das zumindest eine Lichteintritts-Mikrooptikarray an einer ersten Seite der Substratschicht angeordnet ist und das zumindest eine Lichtaustritts-Mikrooptikarray an einer der ersten Seite gegenüberliegenden, zweiten Seite der Substratschicht angeordnet ist,

wobei jeweils eine Mikro-Eintrittsoptik des Lichteintritts-Mikrooptikarrays und jeweils genau eine zugeordnete Mikro-Austrittsoptik des Lichtaustritts-Mikrooptikarrays ein Mikrooptikpaar bilden, indem in eine Mikro-Eintrittsoptik eingekoppelte Lichtstrahlen im Wesentlichen durch die der jeweiligen Mikro-Eintrittsoptik zugeordnete Mikro-Austrittsoptik auskoppelbar sind, wobei die Lichteintrittsfläche der Mikro-Eintrittsoptik und die erste Seite der Substratschicht in einer gemeinsamen Flächenschnittlinie eine erste Randkante ausbilden, und wobei die Lichtaustrittsfläche der Mikro-Austrittsoptik und die zweite Seite der Substratschicht in einer gemeinsamen Flächenschnittlinie eine zweite Randkante ausbilden,
wobei die Substratschicht aus lichtdurchlässigem Glas hergestellt ist, wobei zwischen benachbarten Mikrooptikpaaren eine Störstruktur in der aus Glas hergestellten Substratschicht mittels eines Laserbearbeitungsverfahrens angeordnet ist, um ein Übertreten von in einem Mikrooptikpaar eingekoppelte Lichtstrahlen in ein benachbartes Mikrooptikpaar zu verhindern, wobei sich die Störstruktur im Wesentlichen von der ersten Seite der Substratschicht bis zur zweiten Seite der Substratschicht erstreckt.

Weiters betrifft die Erfindung einen Kraftfahrzeugscheinwerfer mit zumindest einer erfindungsgemäßen Projektionsvorrichtung.

Unter "Hauptabstrahlrichtung" ist die Richtung zu verstehen, in der die Projektionsvorrichtung infolge ihrer Richtwirkung am stärksten bzw. am meisten Licht abstrahlt. Um Lichtverteilungen für ein Kraftfahrzeug zu erzeugen, wird im Stand der Technik unter anderem zu sogenannten "Microlensarrays" - kurz MLAs - gegriffen, wobei Lichtquellen dem MLA vorgeschalten sind.

Allerdings kommt es bei der Lichteinkopplung in den MLA zu Lichtübertritten bzw. zu einem Übersprechen von Lichtstrahlen in benachbarte Linsen, was zu Störlicht führt, welches unerwünscht ist.

Zur Lichteinkopplung in den MLA werden zur Parallelisierung der von den Lichtquellen emittierten Lichtstrahlen Kollimatoren verwendet, welche zur Kostenersparnis oft in einem zusammenhängenden Kollimatorarray aus einem Material hergestellt werden, wobei ein ähnlicher Effekt des Übersprechens von Licht eines Kollimators in einen benachbarten Kollimator auftritt und Störlichter erzeugt bzw. Lichtstrahlen dadurch in eine nicht gewünschte Linse in den MLA einkoppeln.

Da bei einem zusammenhängenden, aus einem Material hergestellten Kollimatorarray es nicht möglich ist, sonst übliche Trennstege einzubauen, da sonst weitere Arbeitsschritte und dadurch auch Kosten erhöht werden, müssen andere Lösungen gefunden werden. Externe Trennstege zwischen den Kollimatoren benötigen überdies auch zusätzlichen Bauraum, wodurch die Effektivität der Kollimatoren gesenkt wird.

Die GB 2 509 764 A und die DE 10 2005 003594 A1 offenbaren Projektionsvorrichtungen aus dem Stand der Technik.

Es ist eine Aufgabe der Erfindung eine verbesserte Projektionsvorrichtung bereitzustellen. Diese Aufgabe wird mit dem Kennzeichen des unabhängigen Anspruchs 1 gelöst.

Es kann vorgesehen sein, dass sich die Störstruktur im Wesentlichen von der ersten Randkante bis zur zweiten Randkante je Mikrooptikpaar erstreckt.

Es kann vorgesehen sein, dass der Lichteintritts-Mikrooptikarray und der Lichtaustritts-Mikrooptikarray fest mit der Substratschicht verbunden sind.

Es kann vorgesehen sein, dass der Lichteintritts-Mikrooptikarray, der Lichtaustritts-Mikrooptikarray und die Substratschicht einstückig aus lichtdurchlässigem Glas hergestellt sind.

Es kann vorgesehen sein, dass die Löcher mit einem lichtabsorbierenden Material gefüllt sind.

Die Aufgabe wird ebenso durch einen Kraftfahrzeugscheinwerfer mit zumindest einer erfindungsgemäßen Projektionsvorrichtung gelöst.

Nachfolgend wird die Erfindung anhand von beispielhaften Zeichnungen näher erläutert. Hierbei zeigt
Fig. 1A eine beispielhafte Projektionsvorrichtung in einer Seitenansicht, gebildet aus einer Substratschicht mit einem Lichteintritts-Mikrooptikarray, umfassend mehrere Mikro-Eintrittsoptiken, und einem Lichtaustritts-Mikrooptikarray, umfassend mehrere Mikro-Austrittsoptiken, wobei in der Substratschicht eine Störstruktur mittels einem Laserbearbeitungsverfahren angeordnet ist,
Fig. 1B die Projektionsvorrichtung aus Fig. 1A in einer Draufsicht,
Fig. 2 die Projektionsvorrichtung aus Fig. 1A und 1B, wobei eine Mikrooptikpaar dargestellt ist, welches aus jeweils einer Mikro-Eintrittsoptik und genau einer Mikro-Austrittsoptik gebildet ist,
Fig. 3 ein weiteres Beispiel einer Projektionsvorrichtung in einer Seitenansicht,
Fig. 4 ein nicht erfindungsgemäßes Lichtmodul, umfassend ein Kollimatorarray und mehreren Lichtquellen, in einer Seitenansicht, und
Fig. 5 eine nicht erfindungsgemäße Beleuchtungsvorrichtung, umfassend eine Projektionsvorrichtung entsprechend der Fig. 1A, 1B und 2, sowie ein Lichtmodul entsprechend der Fig. 4.

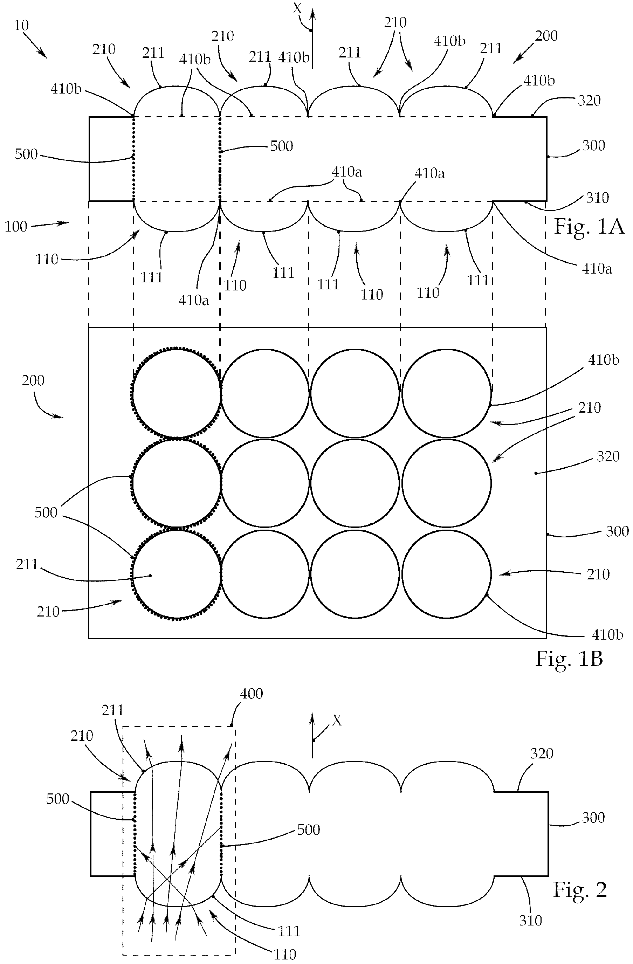

**Fig. 1A** und **Fig. 1B** zeigen eine beispielhafte Projektionsvorrichtung **10** für einen Kraftfahrzeugscheinwerfer, wobei die Projektionsvorrichtung **10** zur Abbildung von Licht in einem Bereich vor einem Kraftfahrzeug in Form zumindest einer Lichtverteilung in eine Hauptabstrahlrichtung **X** eingerichtet ist.

Die Projektionsvorrichtung **10** umfasst im gezeigten Beispiel ein Lichteintritts-Mikrooptikarray **100,** welches eine Mehrzahl in einer zu der Hauptabstrahlrichtung **X** der Projektionsvorrichtung **10** orthogonal stehenden Ebene matrixartig angeordnete Mikro-Eintrittsoptiken **110** mit einer Lichteintrittsfläche **111** aufweist, wobei die Mikro-Eintrittsoptiken **110** eingerichtet sind, Lichtstrahlen einer Lichtquelle über die jeweilige Lichteintrittsfläche **111** in die Projektionsvorrichtung **10** einzukoppeln.

Die Projektionsvorrichtung **10** umfasst weiters ein Lichtaustritts-Mikrooptikarray **200,** welches eine Mehrzahl in einer zu der Hauptabstrahlrichtung **X** der Projektionsvorrichtung **10** orthogonal stehenden Ebene matrixartig angeordnete Mikro-Austrittsoptiken **210** mit einer Lichtaustrittsfläche **211** aufweist, wobei die Mikro-Austrittsoptiken **210** eingerichtet sind, in die Projektionsvorrichtung **10** eingekoppelte Lichtstrahlen über die jeweilige Lichtaustrittsfläche **211** aus der Projektionsvorrichtung **10** in Richtung der Hauptabstrahlrichtung **X** auszukoppeln.

Ferner umfasst die Projektionsvorrichtung **10** eine Substratschicht **300,** an welcher das Lichteintritts-Mikrooptikarray **100** an einer ersten Seite **310** der Substratschicht **300** angeordnet ist und das Lichtaustritts-Mikrooptikarray **200** an einer der ersten Seite **310** gegenüberliegenden, zweiten Seite **320** der Substratschicht **300** angeordnet ist. Dabei sind der Lichteintritts-Mikrooptikarray **100** und der Lichtaustritts-Mikrooptikarray **200** aus lichtdurchlässigem Acrylat hergestellt.

Dabei bilden jeweils eine Mikro-Eintrittsoptik **110** des Lichteintritts-Mikrooptikarrays **100** und jeweils genau eine zugeordnete Mikro-Austrittsoptik **210** des Lichtaustritts-Mikrooptikarrays **200** ein Mikrooptikpaar **400,** indem in eine Mikro-Eintrittsoptik **110** eingekoppelte Lichtstrahlen im Wesentlichen durch die der jeweiligen Mikro-Eintrittsoptik **110** zugeordnete Mikro-Austrittsoptik **210** auskoppelbar sind, was in **Fig. 2** illustrativ dargestellt ist.

Ferner bilden die Lichteintrittsfläche **111** der Mikro-Eintrittsoptik **110** und die erste Seite **310** der Substratschicht **300** in einer gemeinsamen Flächenschnittlinie eine erste Randkante **410a** aus, wobei die Lichtaustrittsfläche **211** der Mikro-Austrittsoptik **210** und die zweite Seite **320** der Substratschicht **300** in einer gemeinsamen Flächenschnittlinie eine zweite Randkante **410b** ausbilden, wie in **Fig. 1A** und **Fig. 1B** zu sehen ist.

Zwischen benachbarten Mikrooptikpaaren **400** ist eine Störstruktur **500** in der aus Glas hergestellten Substratschicht **300** mittels eines Laserbearbeitungsverfahrens angeordnet, um ein Übertreten von in einem Mikrooptikpaar **400** eingekoppelte Lichtstrahlen in ein benachbartes Mikrooptikpaar **400** zu verhindern, wobei sich die Störstruktur **500** im Wesentlichen je Mikrooptikpaar **400** von der ersten Randkante **410a** in kürzester Verbindung bis zur zweiten Randkante **410b** erstreckt und in ihrer Gesamtheit im Wesentlichen eine zylindrische Form bildet, sodass Lichtstrahlen, welche in die Mikro-Eintrittsoptik **110** einkoppeln ausschließlich aus der Mikro-Austrittsoptik **210** des entsprechenden Mikrooptikpaares **400** auskoppeln. Die zylindrische Form ist dabei in **Fig. 1** in Kombination mit **Fig. 1B** zu erkennen.

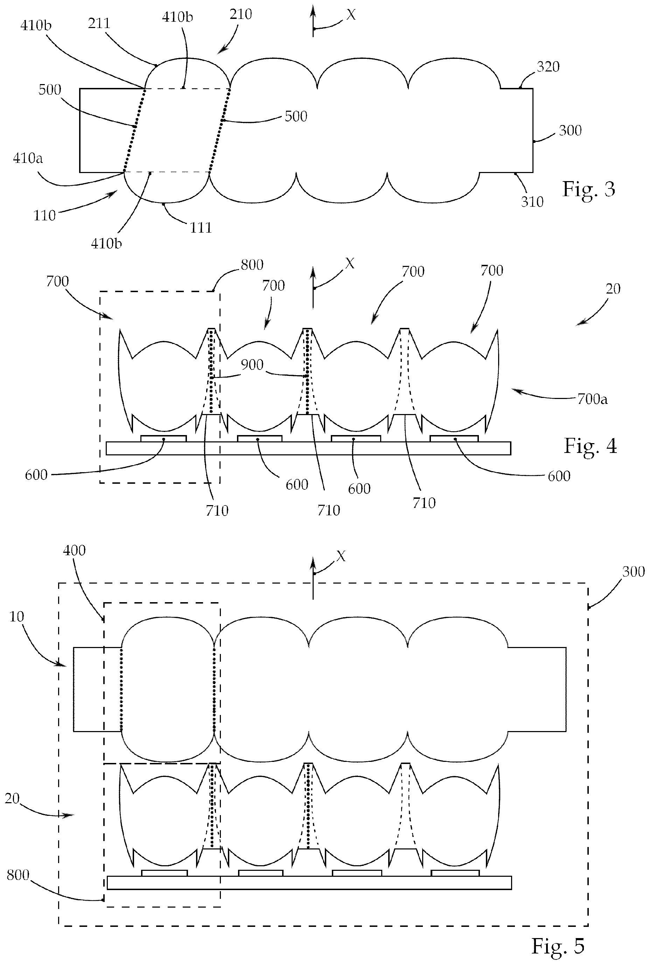

Ein weiteres Beispiel einer Anordnung der Störstruktur **500** ist in **Fig. 3** gezeigt, wobei die Lichtaustritts-Mikrooptiken **210** orthogonal zur Hauptabstrahlrichtung **X** verschoben sind.

Die Störstruktur **500** kann als Mikrorisse ausgebildet sein, wobei die durchschnittliche Länge der Mikrorisse eine Größe im Bereich von 50 - 150 µm aufweist. Ferner kann die Störstruktur **500** als mehrere Löcher ausgebildet sein, wobei ein Loch einen Durchmesser bis zu 5 µm aufweist und die Löcher mit einem lichtabsorbierenden Material gefüllt sind.

**Fig. 4** zeigt ein nicht erfindungsgemäßes Lichtmodul **20** für einen Kraftfahrzeugscheinwerfer, wobei das Lichtmodul **20** mehrere Lichtquellen **600** umfasst, welche eingerichtet sind, Lichtstrahlen zu emittieren.

Ferner umfasst das Lichtmodul **20** mehrere Kollimatoren **700,** welche eingerichtet sind, Lichtstrahlen der Lichtquellen **600** parallel auszurichten, wobei jedem Kollimator **700** jeweils eine Lichtquelle **600** zugeordnet ist, und wobei jeweils eine Lichtquelle **600** und ein der Lichtquelle **600** zugeordneter Kollimator **700** ein Lichtemissionspaar **800** bilden, was durch das in **Fig. 4** eingezeichnete gestrichelte Rechteck erkenntlich gemacht werden soll.

Die Kollimatoren **700** sind über Verbindungsabschnitte **710** zusammenhängend verbunden und bilden ein Kollimatorarray **700a,** wobei die Kollimatoren **700** als ein einstückiges Kollimatorarray **700a** gebildet und aus einem einzigen lichtdurchlässigen Material hergestellt sind. Obwohl nicht in den Figuren zu erkennen, ist das Kollimatorarray **700a** ähnlich zu den Mikrooptikarrays, beispielsweise wie in **Fig. 1B** ersichtlich, in Reihen und Spalten gegliedert.

Zwischen benachbarten Kollimatoren **700** ist in den Verbindungsabschnitten **710** des Kollimatorarrays **700a** zur Lichtabgrenzung jeweils eine Störstruktur **900** mittels eines Laserbearbeitungsverfahrens in dem Material eingebracht, welche Störstruktur **900** eingerichtet ist, ein Übertreten von in einem Kollimator **700** eingekoppelte Lichtstrahlen in einen unmittelbar benachbarten Kollimator **700** zu verhindern. Das lichtdurchlässige Material ist ein kohlenstoffhaltiges Material - im gezeigten Beispiel Polycarbonat. Die Störstruktur **900** ist dabei als Karbonisierungsschicht ausgebildet.

**Fig. 5** zeigt eine nicht erfindungsgemäße Beleuchtungsvorrichtung **30** für einen Kraftfahrzeugscheinwerfer, wobei die Beleuchtungsvorrichtung **30** ein Lichtmodul **20** gemäß dem gezeigten Beispiel aus **Fig. 4** und eine Projektionsvorrichtung **10** gemäß dem gezeigten Beispiel aus **Fig. 1A, 1B** und **2** umfasst.

Dabei ist jedem Mikrooptikpaar **400** der Projektionsvorrichtung **10** der Beleuchtungsvorrichtung **30** genau ein Lichtemissionspaar **800** des Lichtmoduls **20** zugeordnet, wobei die Projektionsvorrichtung **10** und das Lichtmodul **20** derart zueinander angeordnet sind, sodass von einem Lichtemissionspaar **800** emittierende Lichtstrahlen genau in den dem jeweiligen Lichtemissionspaar **800** zugeordneten Mikrooptikpaar **400** der Projektionsvorrichtung **10** einkoppelbar ist.

## Patentansprüche

1. Projektionsvorrichtung (10) für einen Kraftfahrzeugscheinwerfer, wobei die Projektionsvorrichtung (10) zur Abbildung von Licht in Form zumindest einer Lichtverteilung in eine Hauptabstrahlrichtung (X) eingerichtet ist, wobei die Projektionsvorrichtung (10) Folgendes umfasst:
- zumindest ein Lichteintritts-Mikrooptikarray (100), welches eine Mehrzahl in einer zu der Hauptabstrahlrichtung (X) der Projektionsvorrichtung (10) orthogonal stehenden Ebene matrixartig angeordnete Mikro-Eintrittsoptiken (110) mit einer Lichteintrittsfläche (111) aufweist, wobei die Mikro-Eintrittsoptiken (110) eingerichtet sind, Lichtstrahlen einer Lichtquelle über die jeweilige Lichteintrittsfläche (111) in die Projektionsvorrichtung (10) einzukoppeln,
- zumindest ein Lichtaustritts-Mikrooptikarray (200), welches eine Mehrzahl in einer zu der Hauptabstrahlrichtung (X) der Projektionsvorrichtung (10) orthogonal stehenden Ebene matrixartig angeordnete Mikro-Austrittsoptiken (210) mit einer Lichtaustrittsfläche (211) aufweist, wobei die Mikro-Austrittsoptiken (210) eingerichtet sind, in die Projektionsvorrichtung (10) eingekoppelte Lichtstrahlen über die jeweilige Lichtaustrittsfläche (211) aus der Projektionsvorrichtung (10) in Richtung der Hauptabstrahlrichtung (X) auszukoppeln,
- eine Substratschicht (300), an welcher das zumindest eine Lichteintritts-Mikrooptikarray (100) an einer ersten Seite (310) der Substratschicht (300) angeordnet ist und das zumindest eine Lichtaustritts-Mikrooptikarray (200) an einer der ersten Seite (310) gegenüberliegenden, zweiten Seite (320) der Substratschicht (300) angeordnet ist,
wobei jeweils eine Mikro-Eintrittsoptik (110) des Lichteintritts-Mikrooptikarrays (100) und jeweils genau eine zugeordnete Mikro-Austrittsoptik (210) des Lichtaustritts-Mikrooptikarrays (200) ein Mikrooptikpaar (400) bilden, indem in eine Mikro-Eintrittsoptik (110) eingekoppelte Lichtstrahlen im Wesentlichen durch die der jeweiligen Mikro-Eintrittsoptik (110) zugeordnete Mikro-Austrittsoptik (210) auskoppelbar sind, wobei die Lichteintrittsfläche (111) der Mikro-Eintrittsoptik (110) und die erste Seite (310) der Substratschicht (300) in einer gemeinsamen Flächenschnittlinie eine erste Randkante (410a) ausbilden, und wobei die Lichtaustrittsfläche (211) der Mikro-Austrittsoptik (210) und die zweite Seite (320) der Substratschicht (300) in einer gemeinsamen Flächenschnittlinie eine zweite Randkante (410b) ausbilden,
wobei die Substratschicht (300) aus lichtdurchlässigem Glas hergestellt ist, wobei zwischen benachbarten Mikrooptikpaaren (400) eine Störstruktur (500) in der aus Glas hergestellten Substratschicht (300) mittels eines Laserbearbeitungsverfahrens angeordnet ist, um ein Übertreten von in einem Mikrooptikpaar (400) eingekoppelte Lichtstrahlen in ein benachbartes Mikrooptikpaar (400) zu verhindern, wobei sich die Störstruktur (500) im Wesentlichen von der ersten Seite (310) der Substratschicht (300) bis zur zweiten Seite (320) der Substratschicht (300) erstreckt
**dadurch gekennzeichnet, dass**
die Störstruktur (500)
als Mikrorisse ausgebildet ist, wobei vorzugsweise die durchschnittliche Länge der
Mikrorisse eine Größe im Bereich von 50 - 150 µm aufweist, oder
als mehrere Löcher ausgebildet ist, wobei vorzugsweise ein Loch einen Durchmesser bis zu 5 µm aufweist,
wobei sich die Störstruktur je Mikrooptikpaar (400) im Wesentlichen von der ersten Seite (310) bis zur zweiten Seite (320) der Substratschicht (300) erstreckt und in ihrer Gesamtheit im Wesentlichen ein viereckiges, rechteckiges oder sechseckiges Prisma bildet oder sich die Störstruktur (500) je Mikrooptikpaar (400) von der ersten Randkante (410a) in kürzester Verbindung bis zur zweiten Randkante (410b) erstreckt und in ihrer Gesamtheit im Wesentlichen eine zylindrische Form bildet, sodass Lichtstrahlen, welche in die Mikro-Eintrittsoptik (110) einkoppeln ausschließlich aus der Mikro-Austrittsoptik (210) des entsprechenden Mikrooptikpaares (400) auskoppeln.

2. Projektionsvorrichtung nach Anspruch 1, dass sich die Störstruktur (500) im Wesentlichen von der ersten Randkante (410a) bis zur zweiten Randkante (410b) je Mikrooptikpaar (400) erstreckt.

3. Projektionsvorrichtung nach Anspruch 1 oder 2, **dadurch gekennzeichnet, dass** der Lichteintritts-Mikrooptikarray (100) und der Lichtaustritts-Mikrooptikarray (200) fest mit der Substratschicht (300) verbunden sind.

4. Projektionsvorrichtung nach einem der Ansprüche 1 bis 3, **dadurch gekennzeichnet, dass** der Lichteintritts-Mikrooptikarray (100) und der Lichtaustritts-Mikrooptikarray (200) aus lichtdurchlässigem Acrylat hergestellt sind.

5. Kraftfahrzeugscheinwerfer mit zumindest einer Projektionsvorrichtung (10) nach einem der Ansprüche 1 bis 4.

## Claims

1. Projection device (10) for a motor vehicle headlamp, the projection device (10) being set up for imaging light in the form of at least one light distribution in a main radiation direction (X), the projection device (10) comprising the following:
- at least one light-entry micro-optics array (100), which has a plurality of micro-entry optics (110) arranged in a matrix-like manner in a plane orthogonal to the main radiation direction (X) of the projection device (10) and having a light-entry surface (111), the micro-entry optics (110) being set up to couple light beams from a light source into the projection device (10) via the respective light-entry surface (111),
- at least one light exit micro-optics array (200), which has a plurality of micro-exit optics (210) arranged in a matrix-like manner in a plane orthogonal to the main emission direction (X) of the projection device (10) and having a light exit surface (211), the micro-exit optics (210) being set up to couple light beams coupled into the projection device (10) out of the projection device (10) in the direction of the main emission direction (X) via the respective light exit surface (211),
- a substrate layer (300), on which the at least one light-entry micro-optics array (100) is arranged on a first side (310) of the substrate layer (300) and the at least one light-exit micro-optics array (200) is arranged on a second side (320) of the substrate layer (300) opposite the first side (310),
wherein in each case one micro-entry optic (110) of the light-entry micro-optics array (100) and in each case exactly one associated micro-exit optic (210) of the light-exit micro-optics array (200) form a micro-optics pair (400), in that light beams coupled into a micro-entry optic (110) can be coupled out essentially through the micro-exit optic (210) associated with the respective micro-entry optic (110), wherein the light entry surface (111) of the micro-entry optics (110) and the first side (310) of the substrate layer (300) form a first marginal edge (410a) in a common surface section line, and wherein the light exit surface (211) of the micro-exit optics (210) and the second side (320) of the substrate layer (300) form a second marginal edge (410b) in a common surface section line,
wherein the substrate layer (300) is made of translucent glass, an interference structure (500) being arranged between adjacent micro-optical pairs (400) in the substrate layer (300) made of glass by means of a laser processing method, in order to prevent light beams coupled into one micro-optical pair (400) from passing into an adjacent micro-optical pair (400), the interference structure (500) extending essentially from the first side (310) of the substrate layer (300) to the second side (320) of the substrate layer (300)
**characterized in that**
the interfering structure (500)
is formed as microcracks, the average length of the microcracks preferably having a size in the range of 50 - 150 µm,
or is formed as a plurality of holes, one hole preferably having a diameter of up to 5 µm,
wherein the interference structure per micro-optical pair (400) extends essentially from the first side (310) to the second side (320) of the substrate layer (300) and in its entirety essentially forms a quadrangular, rectangular or hexagonal prism, or the interference structure (500) per micro-optics pair (400) extends from the first marginal edge (410a) in shortest connection to the second marginal edge (410b) and in its entirety essentially forms a cylindrical shape, so that light beams which couple into the micro-entry optics (110) couple out exclusively from the micro-exit optics (210) of the corresponding micro-optics pair (400).

2. Projection device according to claim 1, in that the interference structure (500) extends essentially from the first marginal edge (410a) to the second marginal edge (410b) of each micro-optics pair (400).

3. Projection device according to claim 1 or 2, **characterized in that** the light-entry micro-optics array (100) and the light-exit micro-optics array (200) are firmly connected to the substrate layer (300).

4. Projection device according to one of claims 1 to 3, **characterized in that** the light-entry micro-optical array (100) and the light-exit micro-optical array (200) are made of translucent acrylate.

5. Motor vehicle headlamp with at least one projection device (10) according to one of claims 1 to 4.

## Revendications

1. Dispositif de projection (10) pour un projecteur de véhicule automobile, le dispositif de projection (10) étant conçu pour représenter la lumière sous la forme d'au moins une distribution de lumière dans une direction de rayonnement principale (X), le dispositif de projection (10) comprenant ce qui suit :
- au moins un réseau de micro-optiques d'entrée de lumière (100), qui présente une pluralité de micro-optiques d'entrée (110) disposées à la manière d'une matrice dans un plan orthogonal à la direction de rayonnement principale (X) du dispositif de projection (10), avec une surface d'entrée de lumière (111), les micro-optiques d'entrée (110) étant conçues pour coupler des rayons lumineux d'une source lumineuse dans le dispositif de projection (10) par l'intermédiaire de la surface d'entrée de lumière (111) respective,
- au moins un réseau de micro-optiques de sortie de lumière (200), qui présente une pluralité de micro-optiques de sortie (210) disposées à la manière d'une matrice dans un plan orthogonal à la direction de rayonnement principale (X) du dispositif de projection (10), avec une surface de sortie de lumière (211), les micro-optiques de sortie (210) étant conçues pour découpler des rayons lumineux injectés dans le dispositif de projection (10) hors du dispositif de projection (10) par l'intermédiaire de la surface de sortie de lumière respective (211) en direction de la direction de rayonnement principale (X),
- une couche de substrat (300), sur laquelle le au moins un micro-réseau optique d'entrée de lumière (100) est disposé sur un premier côté (310) de la couche de substrat (300) et le au moins un micro-réseau optique de sortie de lumière (200) est disposé sur un deuxième côté (320) de la couche de substrat (300), opposé au premier côté (310),
une micro-optique d'entrée (110) du réseau de micro-optiques d'entrée de lumière (100) et exactement une micro-optique de sortie (210) associée du réseau de micro-optiques de sortie de lumière (200) formant respectivement une paire de micro-optiques (400), en ce que des rayons lumineux couplés dans une micro-optique d'entrée (110) peuvent être découplés essentiellement par la micro-optique de sortie (210) associée à la micro-optique d'entrée (110) respective, la surface d'entrée de lumière (111) de la micro-optique d'entrée (110) et le premier côté (310) de la couche de substrat (300) formant un premier bord (410a) dans une ligne de coupe de surface commune, et la surface de sortie de lumière (211) de la micro-optique de sortie (210) et le deuxième côté (320) de la couche de substrat (300) formant un deuxième bord (410b) dans une ligne de coupe de surface commune,
la couche de substrat (300) étant fabriquée en verre transparent, une structure perturbatrice (500) étant disposée entre des paires de micro-optiques (400) voisines dans la couche de substrat (300) fabriquée en verre au moyen d'un procédé de traitement au laser, pour empêcher un passage de rayons lumineux couplés dans une paire de micro-optiques (400) dans une paire de micro-optiques (400) voisine, la structure perturbatrice (500) s'étendant essentiellement du premier côté (310) de la couche de substrat (300) jusqu'au deuxième côté (320) de la couche de substrat (300).
**caractérisé en ce que**
la structure perturbatrice (500)
est réalisée sous forme de microfissures, la longueur moyenne des microfissures ayant de préférence une taille de l'ordre de 50 à 150 µm,
ou
soit sous forme de plusieurs trous, de préférence un trou ayant un diamètre allant jusqu'à 5 µm,
la structure perturbatrice s'étendant, pour chaque paire de micro-optiques (400), essentiellement du premier côté (310) au deuxième côté (320) de la couche de substrat (300) et formant, dans son ensemble, essentiellement un prisme quadrangulaire, rectangulaire ou hexagonal, ou bien la structure perturbatrice (500) s'étend, par paire de micro-optiques (400), du premier bord (410a) en liaison la plus courte jusqu'au deuxième bord (410b) et forme dans son ensemble une forme sensiblement cylindrique, de sorte que les rayons lumineux qui se couplent dans la micro-optique d'entrée (110) se découplent exclusivement de la micro-optique de sortie (210) de la paire de micro-optiques (400) correspondante.

2. Dispositif de projection selon la revendication 1, en ce que la structure perturbatrice (500) s'étend sensiblement du premier bord marginal (410a) au deuxième bord marginal (410b) par paire de micro-optiques (400).

3. Dispositif de projection selon la revendication 1 ou 2, **caractérisé en ce que** le réseau de micro-optiques d'entrée de lumière (100) et le réseau de micro-optiques de sortie de lumière (200) sont solidaires de la couche de substrat (300).

4. Dispositif de projection selon l'une quelconque des revendications 1 à 3, **caractérisé en ce que** le réseau de micro-optiques d'entrée de lumière (100) et le réseau de micro-optiques de sortie de lumière (200) sont réalisés en acrylate transparent à la lumière.

5. Projecteur de véhicule automobile comportant au moins un dispositif de projection (10) selon l'une des revendications 1 à 4.
